# EUROPEAN PATENT SPECIFICATION

(11) **EP 2 607 381 B1**
(45) Date of publication and mention of the grant of the patent: **24.01.2018**
(21) Application number: 12197565.0
(22) Date of filing: 17.12.2012
(51) Int. Cl.: C08C 19/44, C08L 19/00

(54) **FUNCTIONALIZED ELASTOMER, RUBBER COMPOSITION AND TIRE**
FUNKTIONALISIERTEN ELASTOMER, GUMMI ZUSAMMENSETZUNG UND REIFEN.
ELASTOMÈRE FONCTIONALISÉ, COMPOSITION DE CAOUTCHOUC LE CONTENANT ET PNEU.

(30) Priority: 21.12.2011 US 201113332934; 21.12.2011 US 201113332989; 21.12.2011 US 201113333033
(43) Date of publication of application: 26.06.2013
(73) Proprietor: The Goodyear Tire & Rubber Company, Akron, OH 44316-0001 (US)
(72) Inventor: MRUK, Ralf, L-9164 Lipperscheid (LU); SCHMITZ, Frank, L-7782 Bissen (LU); ROSKAMP, Robert Fokko, D-54294 Trier (DE); HERMANN, Alexandra, D-55116 Mainz (DE); ZENTEL, Rudolf Wilhelm, D-55283 Nierstein (DE); KAES, Christian, L-9184 Schrondweiler (LU)
(74) Representative: Kutsch, Bernd

(56) References cited:
- EP-A1- 0 364 389
- EP-A2- 0 316 255
- FR-A1- 2 416 908
- US-A- 4 229 308
- US-A1- 2004 063 884
- US-A1- 2004 116 635

## Description

### Background

It is important for rubbery polymers that are used in tires, hoses, power transmission belts and other industrial products to have good compatibility with fillers, such as carbon black and silica. To attain improved interaction with fillers such rubbery polymers can be functionalized with various compounds, such as amines. US-B-4,935,471 discloses a process for preparing a polydiene having a high level of affinity for carbon black which comprises reacting a metal terminated polydiene with a capping agent selected from the group consisting of (a) halogenated nitrites, (b) heterocyclic aromatic nitrogen containing compounds, and (c) alkyl benzoates. The capping agents disclosed by US-A- 4,935,471 react with metal terminated polydienes and replace the metal with a terminal cyanide group, a heterocyclic aromatic nitrogen containing group or a terminal group which is derived from an alkyl benzoate. For example, if the metal terminated polydiene is capped with a nitrile, it will result in the polydiene chains being terminated with cyanide groups. The use of heterocyclic aromatic nitrogen containing compounds as capping agents can result in the polydiene chains being terminated with a pyrrolyl group, an imidazolyl group, a pyrazolyl group, a pyridyl group, a pyrazinyl group, a pyrimidinyl group, a pyridazinyl group, an indolizinyl group, an isoindolyl group, a 3-H-indolyl group, a cinnolinyl group, a pteridinyl group, a β-carbolinyl group, a perimidinyl group, a phenanthrolinyl group or the like.

US-A- 4,229,308 and FR-A- 2 416 908 disclose a polymer produced by subjecting a living polymer prepared by anionic polymerization of a conjugated diene or a copolymer of a conjugated diene with a vinyl aromatic compound to a functionalization operation by reaction with a non-polymerziable heterocyclic nitrogen compound.

EP-A- 0 316 255 describes a functionalized polymer comprising a polymeric backbone derived from conjugated diene monomer and a heterocyclic aromatic nitrogen containing functional group bonded to the backbone chain.

US-A- 2004/063884 and US-A- 2004/116635 disclose a functionalized elastomer comprising a polymeric backbone chain derived from a conjugated diene monomer and functionalized monomer comprising a multidentate ligand capable of complexing with a metal ion.

EP-A- 0 364 689 describes a functionalized diene rubber in accordance with the preamble of claim 1 wherein Y is sulfur and Z is a multidentate ligand having two heteroatoms from the nylon.

### Summary

The invention is directed to a functionalized elastomer in accordance with claim 1, a rubber composition in accordance with claim 7, and to a tire in accordance with claim 11.

Dependent claims refer to preferred embodiments of the invention.

### Brief Description of the Drawings

Figure 1 shows a schematic representation of a coordination complex between a metal ion and a functionalized elastomer.
Figure 2 shows a schematic representation of a coordination complex between a metal ion disposed on a surface and a functionalized elastomer.
Figure 3 shows a fragmentary cross-sectional view of a runflat tire showing its tread and carcass with one ply and one insert axially inward of the ply in the sidewall region of the tire as an embodiment of the invention.
Figure 4 shows an enlarged view of the in-circle portion of Figure 2 showing, in cross-section, the encapsulated metal ion in accordance with an embodiment of the present invention.
Figure 5 shows the ¹H-NMR spectrum of a styrene-butadiene elastomer.
Figure 6 shows the UV-vis spectrum of a styrene-butadiene elastomer before and after the reaction with 2-mercaptonaphtalene and the spectrum of the pure thiol.
Figure 7 shows the UV-vis spectrum of a styrene-butadiene elastomer before and after the reaction with 2-mercaptonaphtalene and the spectrum of the pure thiol.
Figure 8 shows the ¹H-NMR spectrum of a styrene-butadiene elastomer before and after reaction with a thiol in the presence of different initiators.
Figure 9 shows a GPC-measurement for a styrene-butadiene elastomer, and the elastomer functionalized with a thiol in the presence of different initiators.
Figure 10 shows an ¹H-NMR of an unfunctionalized styrene-butadiene elastomer compared to the elastomer functionalized with a terpyridine ligand.
Figure 11 shows a GPC graph for an unfunctionalized styrene-butadiene elastomer compared to the elastomer functionalized with a terpyridine ligand.
Figure 12 shows an ¹H-NMR of an unfunctionalized styrene-butadiene elastomer compared to the elastomer functionalized with a terpyridine ligand.
Figure 13 a synthesis scheme for synthesis of a terpyridine ligand.
Figure 14 shows an ¹H-NMR of a terpyridine ligand compared to a styrene-butadiene elastomer functionalized with the terpyridine ligand.
Figure 15 shows UV-vis spectra for a rubber cement/iron salt mixture and for rubber cement.
Figure 16 shows UV-vis spectra for a rubber cement/ruthenium salt mixture and for a rubber cement.

### Detailed Description of Example Embodiments of the Invention

There is disclosed a functionalized elastomer comprising: a polymeric backbone chain derived from a monomer comprising at least one conjugated diene monomer and optionally at least one vinyl aromatic monomer; and a functional group bonded to the backbone chain, the functional group comprising a multidentate ligand capable of complexing with a metal ion.

There is further disclosed a rubber composition comprising: a functionalized elastomer comprising a polymeric backbone chain derived from a monomer comprising at least one conjugated diene monomer and optionally at least one vinyl aromatic monomer; and a functional group bonded to the backbone chain, the functional group comprising a multidentate ligand capable of complexing with a metal ion; and a metal ion.

There is further disclosed a rubber composition comprising: a functionalized elastomer comprising a polymeric backbone chain derived from a monomer comprising at least one conjugated diene monomer and optionally at least one vinyl aromatic monomer; and a functional group bonded to the backbone chain, the functional group comprising a multidentate ligand capable of complexing with a metal ion; and an encapsulated metal salt.

There is further disclosed a pneumatic tire comprising the rubber composition.

The functionalized elastomer has the structure I

X-⁅Y-Z]ₙ (I)

where X is a polymer derived from a monomer comprising at least one conjugated diene monomer and optionally at least one vinyl aromatic monomer; Z is a functional group comprising a multidentate ligand capable of complexing with a metal ion; Y is a divalent sulfur bonded to both X and Z; and n is the number of -⁅Y-Z] groups bonded to X.

In one embodiment, the polymer X is a diene based elastomer comprising at least one carbon-carbon double bond. The phrases "rubber or elastomer containing olefinic unsaturation" or "diene based elastomer" as used herein are equivalent and are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic rubbers are the homopolymerization products of butadiene and its homologues and derivatives, for example, methylbutadiene (i.e., isoprene), dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers for use as polymer X are polyisoprene (natural or synthetic), polybutadiene and SBR.

In one embodiment, polymer X may be an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use as polymer X in this invention.

The solution polymerization prepared SBR (S-SBR) suitable for use as polymer X typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used as polymer X. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

In one embodiment, the functional group Z comprising a multidentate ligand capable of complexing with a metal ion, includes substituted or unsubstituted bipyridinyl groups, substituted or unsubstituted terpyridinyl groups, substituted or unsubstituted phenanthrolinyl groups, and substituted or unsubstituted pyrazinyl groups, and the like.

The functional group Z comprising a multidentate ligand capable of complexing with a metal ion is selected from the group consisting of substituted or unsubstituted bipyridinyl groups, substituted or unsubstituted terpyridinyl group, substituted or unsubstituted phenanthrolinyl group, or substituted or unsubstituted pyrazinyl group.

In one embodiment, the functional group Z comprising a multidentate ligand capable of complexing with a metal ion is a substituted or unsubstituted terpyridinyl group of formula II, or substituted or unsubstituted bipyridinyl group of formula III or IV 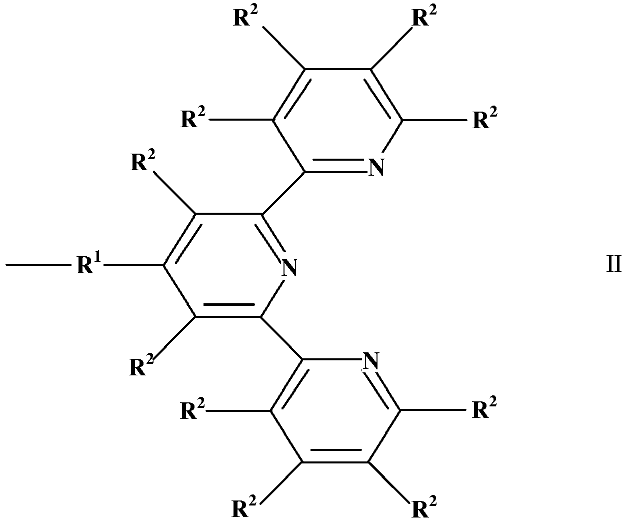 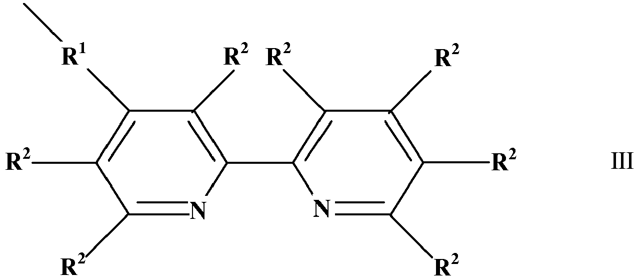 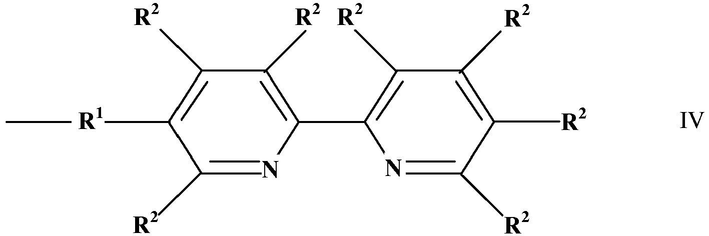 where R¹ forms the linkage from Z to Y in formula I and R¹ is a covalent bond, C2 to C8 linear alkylene, arylene, alkyl substituted arylene , aryl substituted alkylene, thioalkylene, or thioarylene, and R² are independently selected from the group consisting of hydrogen, C2 to C6 linear alkyl, and C2 to C6 branched alkyl.

In one embodiment, the functional group Z comprising a multidentate ligand is a substituted or unsubstituted 2,2';6',2"-terpyridinyl group.

In one embodiment, the functional group Z comprising a multidentate ligand is a substituted or unsubstituted 2,2'-bipyridinyl group.

In one embodiment, the -⁅Y-Z] group is selected from the group consisting of 6-(2,2';6',2"-terpyridin-4'-ylsulfanyl)hexyl-1-sulfanyl, 2,2';6',2"-terpyridin-4'-ylsulfanyl, and 4-(2,2';6',2"-terpyridin-4'-yl)phenylmethylsulfanyl.

Y is a divalent sulfur bonded to both X and Z.

The number n of -⁅Y-Z] groups bonded to X ranges from 2 to 30 in a given copolymer molecule.

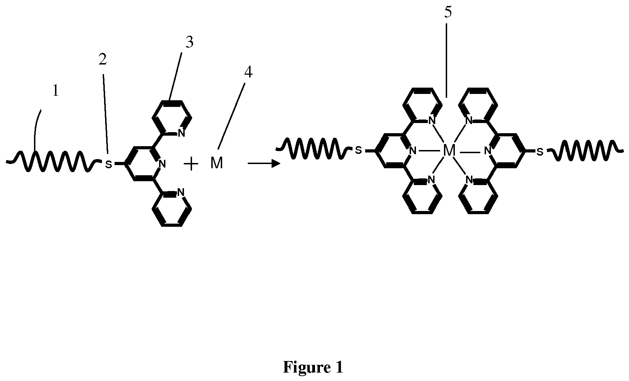

By "capable of complexing with a metal ion," it is meant that as part of the functionalized elastomer of formula I, the functional group Z may form a complex structure with a metal ion; such a metal ion may be present for example by addition of a metal salt during mixing of the functionalized elastomer in a rubber composition. Suitable metal ions include those known to complex with ligands, including but not limited to zinc ions, copper ions, iron ions, nickel ions and ruthenium ions. The complexation of the functional group Z with a metal ion may exist as a complex between a single functional group Z and the metal ion, or as a coordination complex between 2 or more functional groups Z and a metal ion. Figure 1 shows schematically such a coordination complex between an elastomer (1) shown as a wavy line functionalized through a sulfur linkage (2) with a terpyridine group (3) as the ligand. The addition of a metal ion M (4) is shown to form a coordination complex (5) between the metal ion M (4) and two of the ligand groups (3) of the functionalized elastomer.

The functionalized elastomer may be produced by various methods. In one embodiment, the functionalized elastomer may be produced by functionalizing the polymer X with functional group Z comprising a multidentate ligand capable of complexing with a metal ion. A convenient way for the functionalization of a variety of elastomers is the thiol-ene reaction during which alkene moieties being present in the elastomers are transformed into thioethers by reaction with thiols. This reaction proceeds preferably with vinyl groups as they are present in styrene-butadiene rubbers, butadiene rubbers, and polyisoprene rubbers. In order to allow the functionalization of the elastomers, the -⁅Y-Z] grouping, where Y is sulfur, may be linked to the elastomer X through reaction of the thiol HS-Z with vinyl groups of the elastomer X to form a thioether of formula I, where Y is sulfur. Further details of the thiol-ene reaction as it relates to elastomers may be found by reference to US-B- 6,365,668 and US-B-7,847,019.

One step of the method to produce the functionalized elastomer is to obtain as a first polymer X, an elastomer comprising at least one carbon-carbon double bond.

A second step of the method is obtaining a functionalizing agent including a functional group Z comprising a multidentate ligand capable of complexing with a metal ion, and a functional group Y capable of reacting with the carbon-carbon double bond of the first polymer.

A third step of the method is reacting the first polymer X with the functionalizing agent to form the functionalized elastomer. During reacting of the functionalizing agent with the first polymer, the functional group Z is linked to the first polymer through reaction of the functional group Y with the unsaturated carbon-carbon bond of the first polymer.

In one embodiment, the functionalizing agent is reacted with the first polymer in a suitable solvent in the presence of a free-radical initiator via a thiol-ene reaction as is known in the art, see for example Macromolecules 2008, 41, 9946-9947. In one embodiment, the free-radical initiator is selected from the group consisting of 2,4,6-Trimethylbenzoyldiphenylphosphine oxide and azobisisobutyonitrile (AlBN).

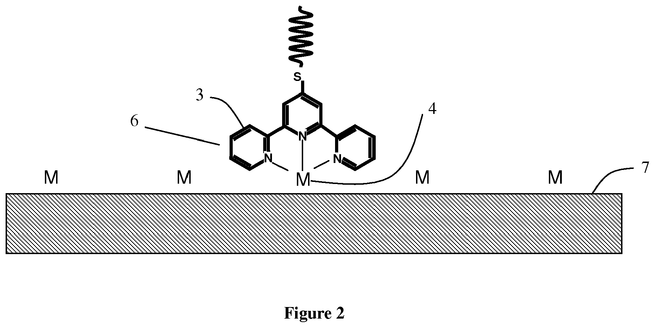

In addition to the functionalized elastomer, the rubber composition includes a metal ion. While not wishing to be bound by any theory, when in the presence of the functionalized elastomer, the metal ion may complex with the functionalized elastomer in a manner similar to that illustrated in Figure 1 and described earlier herein. In Figure 1, the metal ion M is illustrated as freely associated with the functionalized elastomer, such a through addition of a metal salt to the rubber composition. In another embodiment, the complexation may be as illustrated in Figure 2. As seen in Figure 2, the metal ion M (4) is disposed on a surface (7) and forms a complex (6) with the ligand (3). Surface 7 may be the surface of for example a metallic tire cord, a metal nanoparticle, a metalated filler such as metalated carbon black or metalated silica, or a metalated short fiber. The interaction of the metal ion with the functionalized elastomer as depicted in Figures 1 or 2 may result for example in an increase in modulus of the rubber composition, improved interaction with fillers, or improved adhesion of the rubber composition to a reinforcement.

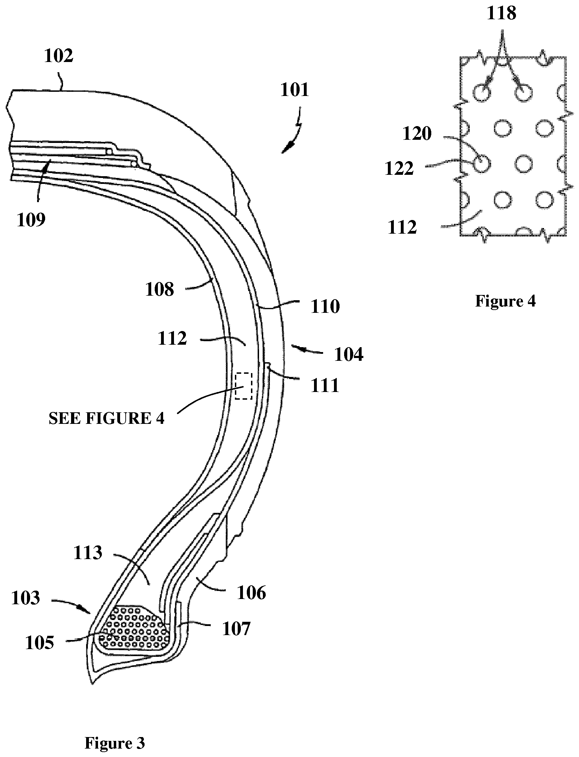

In one embodiment, the metal ion may be present in the rubber composition as an encapsulated metal ion. The disposition of the encapsulated metal ion is illustrated for example in the embodiment illustrated in Figures 3 and 4.

Figure 3 shows a fragmentary cross-section of a runflat tire 101, its tread 102, bead portion 103, sidewall or sidewall region 104, inextensible wire bead core 105, rubber chafer 106, rubber toeguard 107, rubber composition innerliner 108, belt structure 109 underlying a portion of the tread 102, carcass ply 110, carcass ply turnup 111, rubbery sidewall insert 112 and apex 113. The sidewall insert 112 may extend from each bead region radially to the edge of the tread, usually to just beneath the reinforcing belt structures 109.

An encapsulated metal ion 118, as shown in Figure 4, is provided dispersed in sidewall insert 112 of the runflat tire 101. The encapsulated metal ion 118 includes a metal ion 120 encapsulated by a coating material defining a microcapsule 122. The rubbery sidewall insert 112, containing the encapsulated metal ion 118, generally can be formulated by means and methods known to those having ordinary skill in the art.

The coating material of the microcapsule can be selected from a multitude of materials or mixtures thereof. For example, the coating may include waxes such as paraffins, resins such as phenol formaldehyde or urea formaldehyde, carbon pitches, thermoplastic elastomers such as Kraton™ and thermoplastics such as syndiotactic polybutadiene, polyethylene (PE), polyethylene oxide, polyvinyl acetate, ethylene-vinyl acetate copolymers, polyvinyl alcohols (PVA), polyacrylic acid and derivatives, polycarbonates, polymethylmethacrylate (PMMA), polyorthoester, polyvinylpyrrolidone, or polypropylene (PP). In one embodiment, the coating material is polypropylene. In another embodiment, the coating material is paraffin. In yet another embodiment, the coating material is urea formaldehyde.

Since the encapsulated metal ion is processed with rubbery polymers, as further discussed below, to ultimately provide a rubber compound, e.g., rubbery sidewall insert 112 which is suitable for use in tire 101, the coating material selected must be able to withstand the processing temperatures. Such processing can include mixing, calendaring, extrusion, and curing (or vulcanization) steps, for example. Of the processing steps, vulcanization includes the highest temperature encountered by the coating material of the encapsulated metal ion, which may be from 120 °C to 180 °C depending on the characteristics of the rubber composition, for example as used in tire 101.

To that end, the coating material of the microcapsule 122 is chosen so as to be thermally stable at the temperatures it encounters during processing of the rubber compound, which includes curing, yet, selected to be thermally unstable at a desired operating temperature which may be greater than those processing temperatures. In particular, during a deflation event experienced by the run flat tire 101, the insert 112 is exposed not only to high temperatures but also to high mechanical stress. The combination of this mechanical stress with the high temperature operates as a release mechanism (i.e thermo-mechanical release) to rupture the coating material and release the metal ion. Accordingly, while the temperature experienced during the deflated run flat event may be similar to that experienced by the encapsulated metal ion during processing, the added mechanical stress during the run flat event is likely much higher that that experienced during processing. The operating temperature where the coating material is thermally unstable under the stress conditions experienced during a run flat event is referred to herein as the release temperature. Accordingly, the coating material for the microcapsule 122 is selected to both prevent release of the metal ion 120 during the processing steps, such as can occur through melting or softening of the coating material, and to release the metal ion 120, such as via melting or softening and rupture due to mechanical stress, at the release temperature of the rubber composition, for example, as used in tire 112. This release can allow the metal ion 120 to interact with the functionalized elastomer, by reacting with the surrounding rubber. In this way, that area of the rubber compound can be reinforced, for example, via stiffening of the compound. In the embodiment shown in Figures 3 and 4, such stiffening of the insert 112 thereby supports the sidewall 104 during a deflation event of the tire 101. Depending upon the type of coating material used, the point at which the coating material becomes thermally unstable may be defined by its glass transition temperature rather than its melting point.

As already discussed, the release temperature may be greater than the processing temperatures encountered by the coating materials of the encapsulated metal ion Such release temperatures generally vary according to tire characteristics. In one example, the insert compound of a passenger tire may experience a temperature of up to 200 °C during a runflat event. However, it may be desirable to use a release temperature somewhat lower than the ultimate temperature experienced during a run flat event, to allow release of the metal ion at a lower temperature and consequent interaction of the metal ion with the functionalized elastomer to avoid exposure of the tire to the undesirable high temperatures. In this way, the mileage obtained by the runflat tire 101 during a deflation event is increased due to the stiffening of the insert 112 upon release of the metal ion.

The coating thickness of the microcapsule also must provide enough durability for the encapsulated metal ion to withstand the rigors of processing, such as mixing, but allow for rupture during the mechanical stress experienced during a deflation event. As such, in one example, the coating thickness is 18 nm to 6000 nm thick. Also, the diameter of the microcapsules can vary widely but generally may be from 1 micron to 2000 microns. In one embodiment, the diameter is from 10 micron to 150 microns.

Microencapsulation techniques are known to those having ordinary skill in the art. To that end, the encapsulated metal ion can be prepared in a variety of ways. One feature of the processes is that microcapsules are formed completely encasing metal ion to provide microcapsules of the type and size described above. In one example, the microcapsule is formed of a synthetic resin material, and may be produced by well-known polymerization methods, such as interfacial polymerization or in-situ polymerization. In another example, the encapsulated metal ion may be prepared by allowing a mixture, which contains metal ion, molten coating material, and optionally other auxiliaries such as surfactants or dispersants, to flow in a cooling column onto a rapidly rotating device such as a rotary table and migrate to the outside because of the high centrifugal force. Because the diameter is greater at the edge, the particles are separated and the formation of agglomerates avoided. After being flung off from the edge of the rotating device, the particles, or encapsulated metal ion, fly away to the outside individually and cool in the process, as a result of which the coating solidifies.

Other processes, such as spray-drying, fluidized-bed coating, emulsion or suspension processes and precipitation also come into consideration for the preparation of the encapsulated metal ion.

Upon attained the release temperature of the encapsulated metal ion, as for example during a deflation invention in a runflat tire, the metal ion is released from the microcapsule and exposed to the surrounding rubber composition, including the functionalized elastomer.

The metal ion is generally added to the rubber composition in an amount sufficient to complex with the functionalized elastomer; depending on the amount of functionalized elastomer present in the rubber composition and the number of ligand groups in an elastomer molecule, the amount of metal ion required can be easily determined by one skilled in the art. Amounts of metal ion in excess of, or less than, the stoichiometric amount of metal ion may be used, depending on the desired effect.

In one embodiment, the metal ion includes divalent copper, divalent iron, divalent cobalt, divalent nickel, and divalent ruthenium , i.e., Cu²⁺, Fe²⁺, Co²⁺, Ni²⁺, Zn²⁺ and Ru²⁺.

In one embodiment, the metal ion is added to the rubber composition as a metal salt. In one embodiment, the metal ion is added to the rubber composition as a metal salt including FeSO₄▪ 7H₂0, FeCl₂, NiCl₂, RuCl₃, cobalt stearate or zinc stearate.

In one embodiment, the metal ion is present in the rubber composition as a metal ion disposed on the surface of a metallic tire cord as is known in the art, such as a steel tire cord. Such steel cords may be used for example in reinforcing steel belts in the tire. Suitable steel tire cords may have for example surfaces treated with brass, copper, or cobalt. The rubber composition as a wirecoat or skim coat contacts the surface of the metallic cord; sufficient adhesion of the rubber composition to the metallic tire cord is important in performance of the tire. Interaction of the functionalized elastomer with the metal ions disposed on the surface of the metallic tire cord may enhance adhesion of the rubber composition to the metallic tire cord.

In one embodiment, the metal ion is added to the rubber composition as a metal disposed on the surface of a metalated short fiber. Suitable short fibers include those commonly used in rubber compositions, having a length ranging from 0.1 to 10 mm. In various embodiments, the metalated short fiber may be metalated polybisbenzoxazole fibers, metalated polyaramid fibers, metalated glass fibers, metalated carbon fibers, metalated polyamide fibers, metalated cellulose fibers, metalated polyester fibers, metalated rayon fibers, and metalated polyketone fibers. Suitable metalated short fibers include those disclosed in US-A- 2010/0319827. The metalated short fibers are present in the rubber composition in an amount sufficient to impart the desired effect, such as a reinforcement effect or enhancement of the modulus. In one embodiment, the metalated short fibers are present in an amount ranging from 1 to 100 phr.

In one embodiment, the metal ion is added in the form of metal nanoparticles. Suitable nanoparticles include copper nanoparticles with particle sizes ranging from 10 to 100 nm, available from American Elements of Los Angeles, CA.

In one embodiment, the metal ion is added to the rubber composition as a metal disposed on the surface of a metalated carbon black. Suitable metalated carbon black include aggregates of a carbon phase and a metal-containing species phase, for example as disclosed in US-B- 6,017,980. In one embodiment, the metalated carbon black is present in an amount ranging from 1 to 100 phr.

In one embodiment, the metal ion is added to the rubber composition as a metal diposed on the surface of a metalated silica. Suitable metalated silica include silica having metal diposed on the surface thereof, for example as disclosed in US-B- 7,943,693. In one embodiment, the metalated silica is present in an amount ranging from 1 to 100 phr.

The rubber composition may optionally include, in addition to the functionalized elastomer and the metal ion, one or more rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the at least one additional rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

Various commercially available silicas may be used, such as, only for example herein, and without limitation, silicas commercially available from PPG Industries under the Hi-Sil trademark with designations 210 or 243; silicas available from Rhodia, with, for example, designations of Z1165MP or Z165GR and silicas available from Degussa AG with, for example, designations VN2 or VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including but not limited to those disclosed in US-B- 6,242,534; US-B- 6,207,757; US-B- 6,133,364; US-B- 6,372,857; US-B- 5,395,891; or US-B-6,127,488, and plasticized starch composite filler including but not limited to that disclosed in US-A- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Q-Alk-S_{q}-Alk-Q V

in which Q is selected from the group consisting of 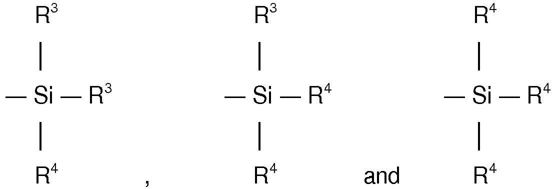 where R³ is an alkyl group of 1 to 4 carbon atoms, cyclohexyl or phenyl; R⁴ is alkoxy of 1 to 8 carbon atoms, or cycloalkoxy of 5 to 8 carbon atoms; Alk is a divalent hydrocarbon of 1 to 18 carbon atoms and q is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula V, Q may be 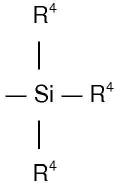 where R⁴ is an alkoxy of 2 to 4 carbon atoms, alternatively 2 carbon atoms; alk is a divalent hydrocarbon of 2 to 4 carbon atoms, alternatively with 3 carbon atoms; and q is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 0.1 to 5 phr. Lower amounts of zinc oxide may be used to avoid complexation with the functionalized elastomer. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire as are known in the art. For example, the rubber component may be a tread (including tread cap and tread base), sidewall, apex, chafer, sidewall insert, wirecoat or innerliner.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from about 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Example 1

In this example, functionalization of a styrene-butadiene rubber with 2-mercaptonaphthalene is illustrated to demonstrate the thiol-ene reaction.

To test the reactivity and reaction conditions of the styrene-butadiene rubber in a thiol-ene reaction, some reactions with a model thiol were made. The chosen thiol was 2-mercaptonaphthalene, from Aldrich.

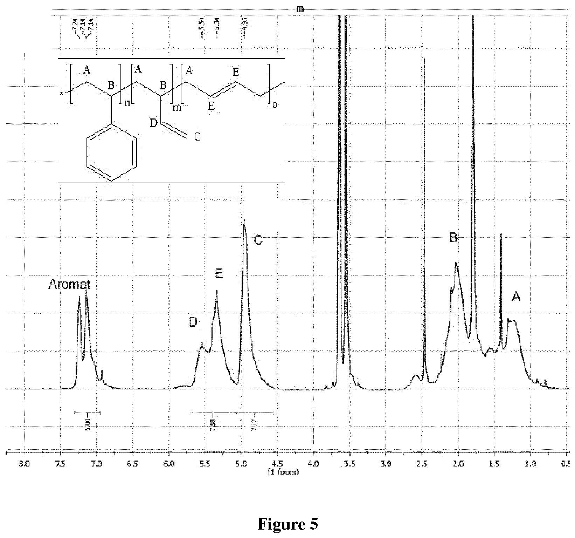

The properties of the used styrene-butadiene rubber are summarized in Table 1. Figure 5 shows the ¹H-NMR spectrum of the elastomer.

**Table 1**

| | |
|---|---|
| Mooney (avg) | 27.6 |
| Finished Mooney | 23.1 |
| Tg (onset)/ °C | -21.74 |
| Tg (midpoint) / °C | -17.52 |
| FTIR Styrene | 25.392 |
| FTIR Vinyl | 47.506 |
| FTIR Cis | 13.144 |
| FTIR Trans | 13.058 |
| Mn / g/mol | 124122 |
| Mw / g/mol | 207982 |
| Mz / g/mol | 327454 |
| PDI | 1.67 |

### Synthesis of 2-mercaptonaphthalene functionalized rubber

This compound was synthesized twice, once with AIBN as initiator for the reaction and once with an acylphosphine oxide photoinitiator (Lucirin TPO).

For the reaction initiated by AIBN, 1 g of SBR was dissolved in 50 ml dry THF and 1.40 g of 2-mercaptonaphthalene and 0.14 g AIBN were added. The solution was degassed under a stream of argon for 2 hours and was then placed in a preheated oil bath at 75 °C. The reaction was stirred for 14.5 hours at that temperature.

For the reaction initiated by the photoinitiator, a mixture of 1 g SBR, 1.40 g 2-mercaptonaphthalene and 0.30 g Lucirin TPO was degassed under a stream of argon for 2 hours and then was placed under a UV-lamp (320-380 nm) for 14.5 hours.

To make sure that no free thiol was present in the product, both reaction mixtures were dialyzed against THF for two days. Afterwards the solvent was evaporated and the product was dried under vacuum.

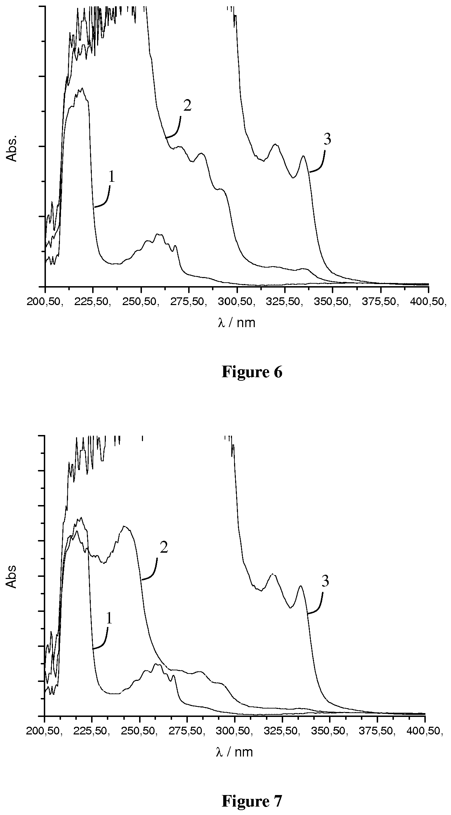

Figure 6 shows the UV-vis spectrum of the elastomer before (1) and after the reaction with 2-mercaptonaphtalene (2) and the spectrum of the pure thiol (3). Here the photoinitiator was used. Figure 7 shows the same for the reaction which was initiated by AIBN, with the UV-vis spectrum of the elastomer before (1) and after the reaction with 2-mercaptonaphthanline (2) and the spectrum of the pure thiol (3).

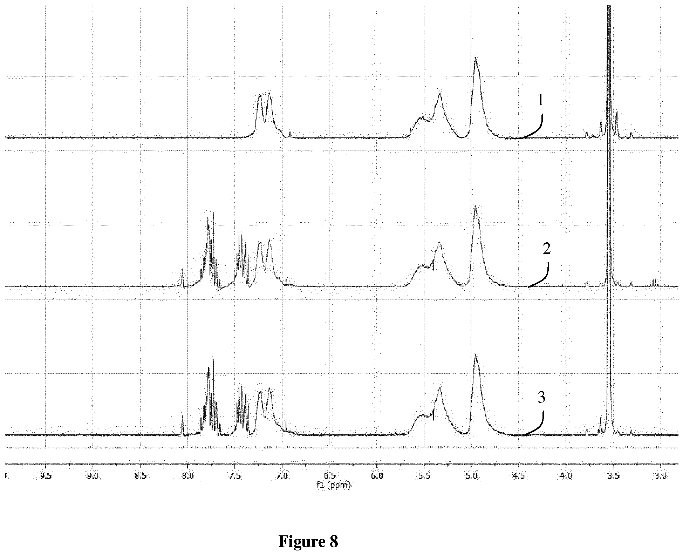

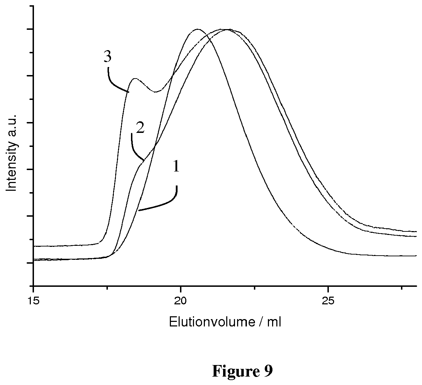

Figure 8 shows the ¹H-NMR spectrum of the elastomer before (1) and after reaction with the thiol in the presence of AIBN (2) and Lucirin (3). Compared to the ¹H-NMR spectrum of the unfunctionalized rubber, there is an increase of the signals for the aromatic protons and a decrease for the vinyl groups after the polymer analogous reaction, confirming that the SBR was successfully functionalized with 2-mercaptonaphthalene. GPC-measurement (in THF) as shown in Figure 9 for the SBR (1), the SBR functionlized in the presence of AIBN (2) and in the presence of Lucirin (3) confirmed that the product is not greatly cross linked. As seen in Figure 9, especially the curve of the AIBN-initiated product (2) shows very little cross linking (small shoulder), so that the decrease of the signal of vinyl protons can be assigned to functionalization.

### Example 2

In this example, functionalization of a styrene-butadiene rubber with 6-(2,2';6',2"-terpyridin-4'-ylsulfanyl)hexane-1-thiole (formula IV)is illustrated.

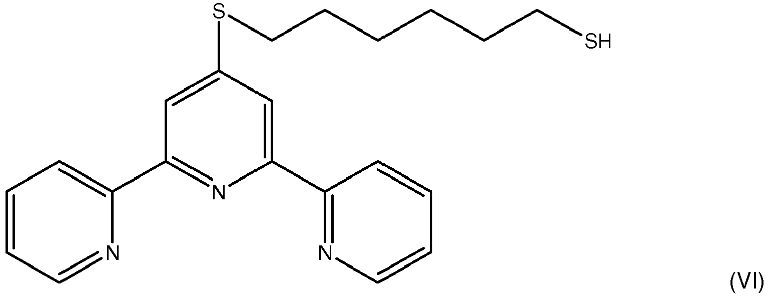

### Synthesis of 6-(2,2';6',2"-terpyridin-4'-ylsulfanyl)hexane-1-thiol

The terpyridine of formula VI was obtained in a 4 step reaction using literature procedures [U. S. Schubert, C. Eschbaumer, O. Hien, P. R. Andres, Tetrahedron Lett. 2001, 42, 4705; U. S. Schubert, S. Schmatloch, A. A. Precup, Designed Monomers and Polymers 2002, 5, 211.]. The yield and analysis at each step was as follows:

### Step 1: 1,5-bis-(2'-pyridyl)-1,3,5-tricarbonyl pentane

Ethylpicolinate was reacted with acetone in the presence of NaH in tetrahydrofuran. The reaction mixture was refluxed for eight hours.
Yield: 41 % yellow crystals
¹H-NMR (CDCl₃ / 300 MHz): [ppm]: 2.10 (s, 4H); 7.24 (s, CDCl3); 7.40-7.44 (m, 2H); 7.84-7.95 (m, 4H); 8.76-8.77 (m, 2H)

### Step 2: 2,6-bis-(2'-pyridyl)-4-pyridone

The product of step 1 was reacted with ammonium acetate with a 48 hour reflux. Yield: 67 % light pink crystals
¹H-NMR (CDCl₃ / 300 MHz): [ppm]: 6.77 (s, 2H); 7.24 (s, CDCl3); 7.36-7.38 (m, 2H); 7.77-7.86 (m, 4H); 8.64-8.66 (m, 2H)

### Step 3: 4'-chloro-2,2';6',2"-terpyridine

The product of step 2 was reacted with potassium pentachloride in phosphoryl chloride with a 24 hour reflux.
Yield: 55 % light purple
¹H-NMR (CDCl₃ / 300 MHz): [ppm]: 7.24 (s, CDCl3); 7.80-7.86 (m, 2H); 8.46 (s, 2H); 8.55 (t, 2H); 8.58 (t, 2H); 8.66-8.69 (m, 2H)

### Step 4: 6-(2,2';6',2"-terpyridin-4'-ylsulfanyl)hexane-1-thiol

The product of step 3 was reacted with 1,6-hexanedithiol in the presence of potassium hydroxide in dimethylsulfoxide.
Yield: 35 % colorless crystals
¹H-NMR (CDCl₃ / 300 MHz): [ppm]: 1.32-1.63 (m, 4H), 1.79-1.88 (m, 4H), 3.63 (q, 2H), 4.7 (t, 2H), 7.24 (s, CDCl3); 7.27-7.32 (m, 2H); 7.78-7.84 (m, 2H); 7.96 (s, 2H); 8.56-8.65 (m, 4H)

The styrene butadiene rubber of Example 1 was functionalized with 6-(2,2;6',2"-terpyridin-4'-ylsulfanyl)hexane-1-thiol following the procedures of Example 1 for 2-mercaptonaphthalene.

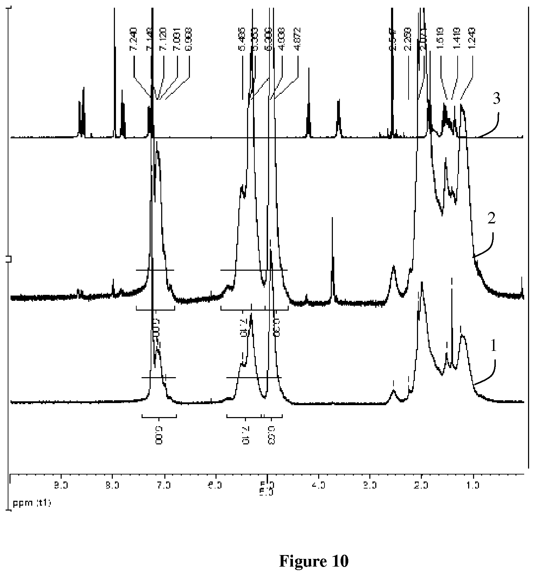

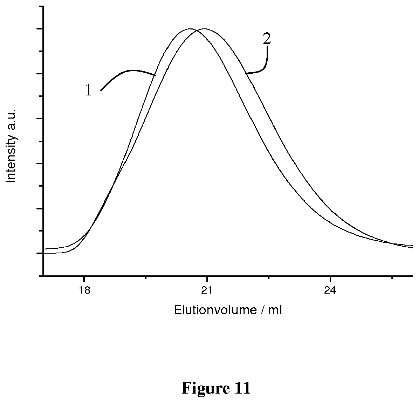

Figure 10 shows the ¹H-NMR of the unfunctionalized elastomer (1) compared to the rubber functionalized with the terpyridine ligand (2), and the terpyridine (3). As seen in Figure 10, a small amount of the ligand has reacted with the vinylgroups of the elastomer. Very small signals in the aromatic region of the functionalized rubber spectrum (2) between 8 and 9 ppm belonging to the hydrogen of the ligand can be observed, indicating a successful functionalization. Figure 11 shows a GPC graph for the SBR (1) and the functionalized SBR (2). As seen in Figure 11, essentially no change in molecular weight could be observed in the GPC measurement, so that the reduction of vinylprotons can be assigned to functionalization.

### Example 3

In this example, functionalization of a styrene-butadiene rubber with 4'-mercapto-2,2':6',2"-terpyridine (formula VII) is illustrated

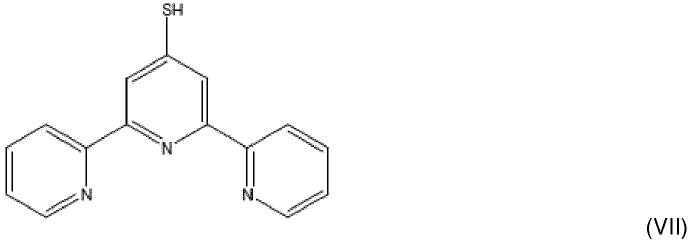

### Synthesis of -4'-mercapto-2,2':6',2"-terpyridine

The terpyridine of formula VII was obtained using the 4 step procedure as given in Example 2, with the modification that in step 4, the 4'-chloro-2,2';6',2"-terpyridine product of step 3 was reacted with sodium hydrogensulfide (NaSH) in the presence of potassium hydroxide in dimethylformamide (DMF).
Yield: 88%

The styrene butadiene rubber of Example 1 was functionalized with 4'-mercapto-2,2':6',2"-terpyridine following the procedures of Example 1 for 2-mercaptonaphthalene.

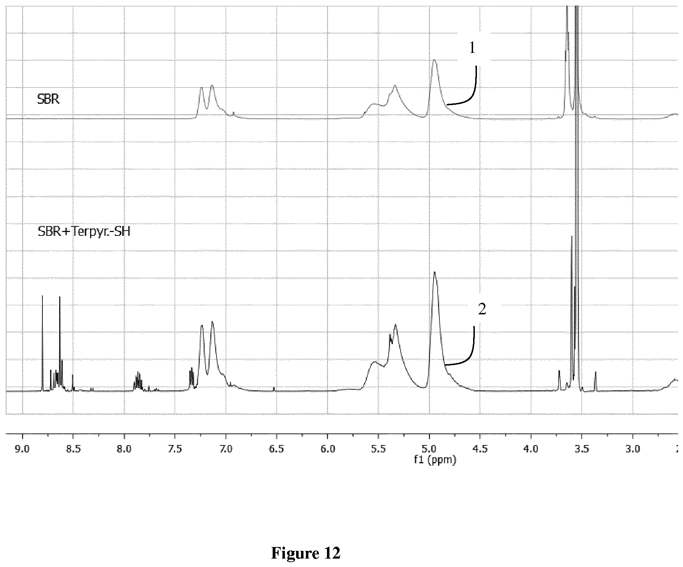

Figure 12 shows the ¹H-NMR of the unfunctionalized elastomer (1) compared to the rubber functionalized with the terpyridine ligand (2). As seen in Figure 12, a small amount of the ligand has reacted with the vinylgroups of the elastomer. Very small signals in the aromatic region of the functionalized rubber spectrum (2) between 8 and 9 ppm belonging to the hydrogen of the ligand can be observed, indicating a successful functionalization.

### Example 4

In this example, functionalization of a styrene-butadiene rubber with 4'-(4-mercaptomethylphenyl)-2,2':6,2"-terpyridine (formula VIII) is illustrated.

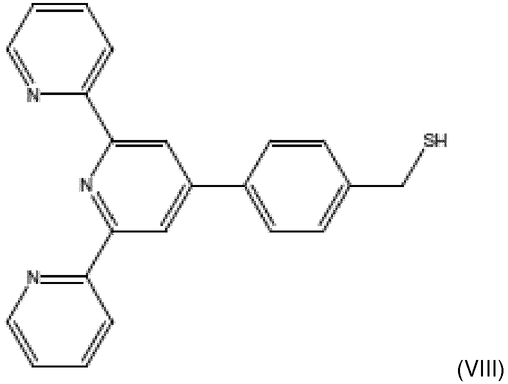

### Synthesis of 4'-(4-mercaptomethylphenyl)-2,2':6,2"-terpyridine

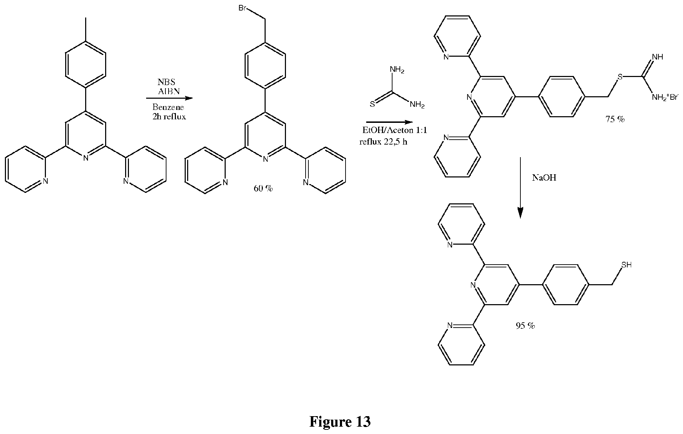

The terpyridine of formula VIII was obtained following a synthesis route as shown in Figure 13.

### Step 1: 4'-methylphenyl-2,2':6,2"-terpyridine

### [X. J. Zhang, D. Li, X. P. Zhou, New J. Chem. 2006, 30, 706.]

4.6 g (0.115 mol) NaOH was mixed with 6.4 g (0.05 mol) p-tolylaldehyde and 12.8 g (0.10 mol) 2-acetylpyridine in a mortar, until a yellow powder was produced. The powder was transferred to a flask which contained 35 g ammonia acetate (excess) and 90 ml acetic acid (100%). The mixture was heated under reflux for three hours. Afterwards 50 ml ethanol and 68 ml water were added. Upon cooling the red solution the product crystallized. It was recrystallized from ethanol twice.
Yield: 65 % light yellow crystals
¹H-NMR (CDCl₃ / 300 MHz): [ppm]: 2.41 (s, 3H); 7.29-7.37 (m, 4H); 7.81 (d, 2H); 7,87 (td, 2H); 8.66 (d, 2H); 8.71-8,73 (m, 4H)

### Step 2: 4'-(4-bromomethylphenyl)-2,2':6,2"-terpyridine

7.07 g 4'-methylphenyl-2,2':6,2"-terpyridine, 0.28 g AIBN and 4.67 g N-Bromsuccinimide were dissolved in 70 ml benzene and heated under refux for 6 hours. The resulting suspension was filtered hot to remove the succinimide. The solvent of the filtrate was evaporated and the resulting solid was recrystallized from ethanol/aceton 2:1. Yield: 60 % dark yellow crystals
¹H-NMR (CDCl₃ / 300 MHz): [ppm]: 4.55 (s, 2H); 7.33-7.38 (m, 2H); 7.52 (d, 2H); 7,85-7.92 (m, 4H); 8.66 (td, 2H); 8.71-8,73 (m, 4H)

### Step 3: 4'-(4-isothiouroniumbromidemethylphenyl)-2,2':6,2"-terpyridine

This step was carried out according to the literature procedure *[*G. C. Zhou, Harruna, II, Macromolecules 2005, 38, 4114*]*.
Yield: 75 %

### Step 4: 4'-(4-mercaptomethylphenyl)-2,2':6,2"-terpyridine

This step was carried out according to the literature procedure *[*G. C. Zhou, Harruna, II, Macromolecules 2005, 38, 4114*]*.
Yield: 95 %
¹H-NMR (CDCl₃ / 300 MHz): [ppm]: 3.69 (s, 2H); 7.28-7.38 (m, 4H); 7.81-7.88 (m, 4H); 8.61-8.70 (m, 6H)

The styrene butadiene rubber of Example 1 was functionalized with 4: 4'-(4-mercaptomethylphenyl)-2,2':6,2"-terpyridine following the procedures of Example 1 for 2-mercaptonaphthalene.

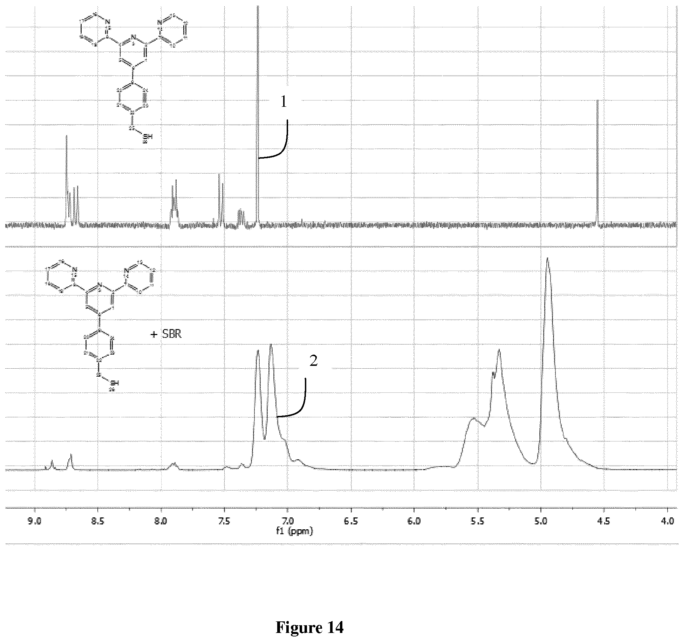

Figure 14 shows the ¹H-NMR of the rubber functionalized with the terpyridine ligand (2), and the terpyridine (1). As seen in Figure 14, a small amount of the ligand has reacted with the vinylgroups of the elastomer. Very small signals in the aromatic region of the functionalized rubber spectrum (2) between 8 and 9 ppm belonging to the hydrogen of the ligand can be observed, indicating a successful functionalization.

### Example 5

In this example, the effect of adding a iron salt to a functionalized elastomer is illustrated. A rubber cement was prepared by adding 0,4 g of the functionalized elastomer of Example 4 to 4 ml of THF in a small vial. The rubber cement was combined with 0,02 g of FeSO₄ ▪ 7H₂0 and the vial was shaken for 7 hours. Visual inspection of the rubber cement/metal salt mixture showed a purple color, as compared with the colorless rubber cement.

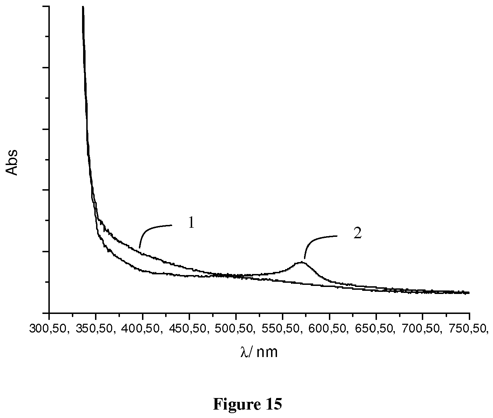

UV-vis spectra for the rubber cement/metal salt and rubber cement are shown in Figure 15. As seen in Figure 15, the rubber cement/metal salt spectrum (2) shows an absorbance peak at about 571 nm, indicating the formation of a coordination complex between the terpyridine moieties of the functionalized elastomer and the Fe²⁺ ion. The rubber cement spectrum (1) shows no such peak.

### Example 6

In this example, the effect of adding a ruthenium salt to a functionalized elastomer is illustrated. A rubber cement was prepared by adding 0.03 g of the functionalized elastomer of Example 4 to 5ml THF and 0,25 ml MeOH in a small vial. The rubber cement was combined with 0.02 g of RuCl₃ and the vial was heated up to 65 °C for 20 hours and shaken. Visual inspection of the rubber cement/metal salt mixture showed a dark red color, as compared with the colorless rubber cement.

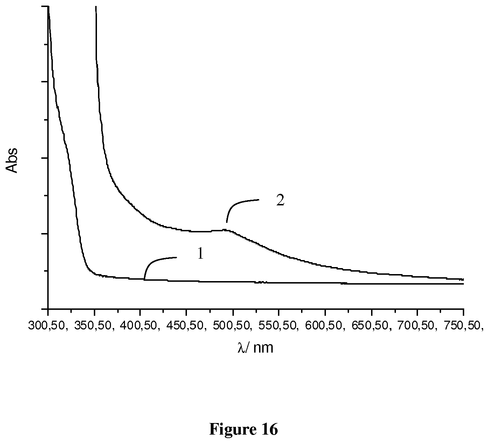

UV-vis spectra for the rubber cement/metal salt and rubber cement are shown in Figure 16. As seen in Figure 16, the rubber cement/metal salt spectrum (2) shows an absorbance peak at about 490 nm, indicating the formation of a coordination complex between the terpyridine moieties of the functionalized elastomer and the Ru²⁺ ion. The rubber cement spectrum (1) shows no such peak.

## Claims

1. A functionalized diene-based elastomer of formula I 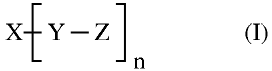 where X is a polymer derived from a monomer comprising at least one conjugated diene monomer and optionally at least one vinyl aromatic monomer; Z comprises a multidentate ligand group capable of complexing with a metal ion; Y is a divalent sulfur bonded to both X and Z; and n is the number of -⁅Y-Z] groups bonded to X, **characterized in that** Z comprises a ligand selected from the group consisting of a substituted bipyridinyl groups, unsubstituted bipyridinyl groups, substituted terpyridinyl groups, unsubstituted terpyridinyl groups, substituted phenanthrolinyl groups, unsubstituted phenanthrolinyl groups, substituted pyrazinyl groups, and unsubstituted pyrazinyl groups.

2. The functionalized diene-based elastomer of claim 1, wherein Z comprises a ligand of formula II, III or IV 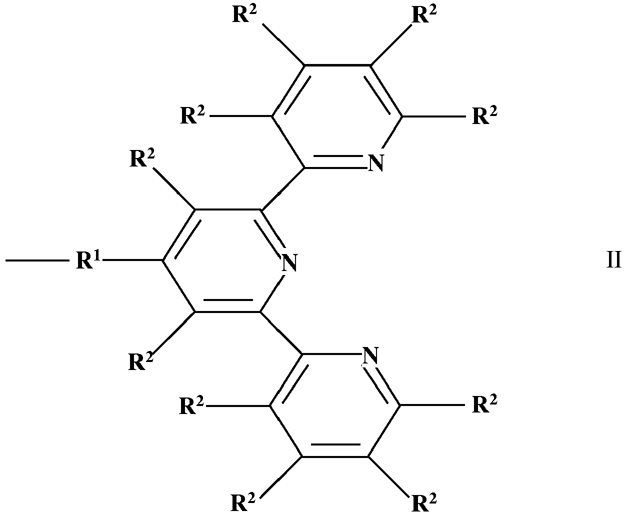 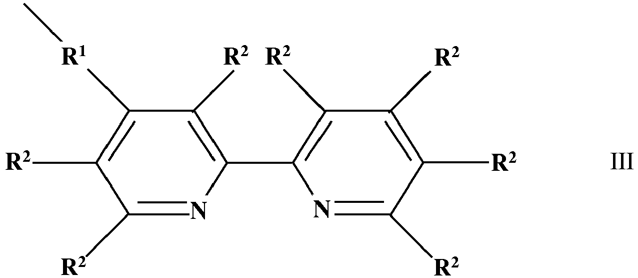 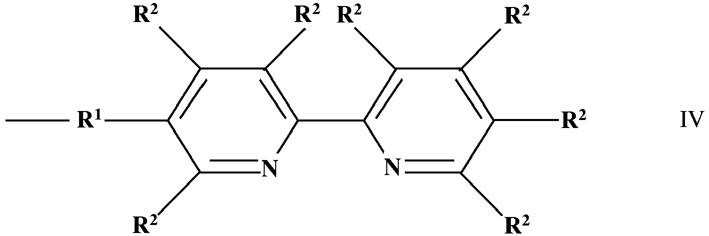 where R¹ forms the linkage from Z to Y in formula I and R¹ is a covalent bond, a C2 to a C8 linear alkylene, arylene, alkyl substituted arylene, aryl substituted alkylene, thioalkylene, or thioarylene, and R² are independently selected from the group consisting of hydrogen, a C2 to a C6 linear alkyl, and a C2 to a C6 branched alkyl.

3. The functionalized diene-based elastomer of claim 1, wherein X is selected from the group consisting of styrene-butadiene rubbers, polybutadiene rubbers, and polyisoprene rubbers.

4. The functionalized diene-based elastomer of claim 1, wherein Z comprises a ligand selected from the group consisting of substituted 2,2';6'2"-terpyridinyl groups, unsubstituted 2,2';6'2"-terpyridinyl groups, substituted 2,2'-bipyridinyl groups, and unsubstituted 2,2'-bipyridinyl groups.

5. The functionalized diene-based elastomer of claim 1, wherein -⁅Y-Z] group is selected from the group consisting of 6-(2,2';6',2"-terpyridin-4'-ylsulfanyl)hexyl-1-sulfanyl, 2,2';6',2"-terpyridin-4'-ylsulfanyl, and 4-(2,2';6',2"-terpyridin-4'-yl)phenylmethylsulfanyl.

6. The functionalized diene-based elastomer of claim 1, wherein n ranges from 2 to 30.

7. A rubber composition comprising the functionalized elastomer of at least one of the previous claims and a metal ion.

8. The rubber composition of claim 7, wherein the metal ion comprises or is provided in the form of or by:
(i) a metal salt; or
(ii) a metal nanoparticle; or
(iii) a metalated filler selected from the group consisting of a metalated carbon black and a metalated silica; or
(iv) a metalated short fiber; or
(v) an encapsulated metal ion.

9. The rubber composition of claim 8 wherein the encapsulated metal ion comprises or is provided in the form of or by a metal salt encapsulated by a coating material, prefereably by a coating material selected from the group consisting of waxes, resins, carbon pitches, thermoplastic elastomers, and thermoplastics.

10. The rubber composition of claim 7, 8 or 9, wherein
(i) the metal ion comprises or is provided in the form of or by a metal salt selected from the group consisting of FeSO₄▪ 7H₂0, FeCl₂, NiCl₂, RuCl₃, cobalt stearate, and zinc stearate; or
(ii) the metal ion comprises or is provided in the form of or by at least one member selected from the group consisting of metalated carbon black, metalated silica, copper disposed on the surface of a steel cord, metalated short fibers, and metal nanoparticles.

11. A tire comprising the rubber composition in accordance with at least one of the previous claims 7 to 10.

12. The tire of claim 11 wherein the metal ion comprises or is provided in the form of or by copper disposed on the surface of a steel tire cord, and wherein the rubber composition is in contact with the steel tire cord.

13. The tire of claim 11 or 12 wherein the tire is a pneumatic runflat tire comprising a sidewall insert, the sidewall insert comprising the rubber composition in accordance with at least one of the previous claims 7 to 10.

## Patentansprüche

1. Funktionalisiertes dienbasiertes Elastomer der Formel I
x-⁅Y-Z]ₙ (I)
wobei X ein Polymer ist, das von einem Monomer abgeleitet ist, umfassend mindestens ein konjugiertes Dien-Monomer und optional mindestens ein vinylaromatisches Monomer; Z eine mehrzähnige Ligandengruppe umfasst, die zur Komplexbildung mit einem Metallion fähig ist; Y ein an sowohl X als auch Z gebundener zweiwertiger Schwefel ist; und n die Anzahl von an X gebundenen -[- Y-Z ]-Gruppen ist, **dadurch gekennzeichnet, dass** Z einen Liganden umfasst, der aus der Gruppe ausgewählt ist, bestehend aus substituierten Bipyridinylgruppen, unsubstituierten Bipyridinylgruppen, substituierten Terpyridinylgruppen, unsubstituierten Terpyridinylgruppen, substituierten Phenanthrolinylgruppen, unsubstituierten Phenanthrolinylgruppen, substituierten Pyrazinylgruppen und unsubstituierten Pyrazinylgruppen.

2. Funktionalisiertes dienbasiertes Elastomer nach Anspruch 1, wobei Z einen Liganden der Formel II, III oder IV umfasst 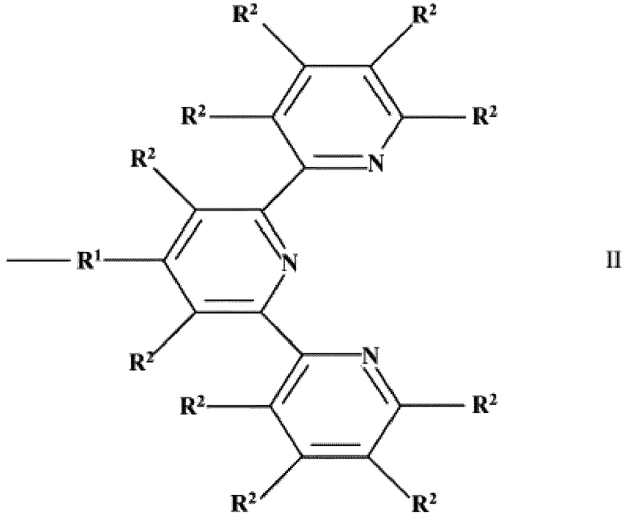 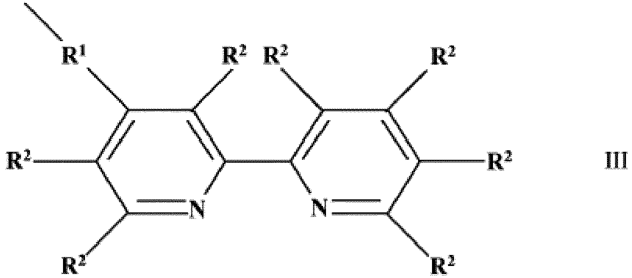 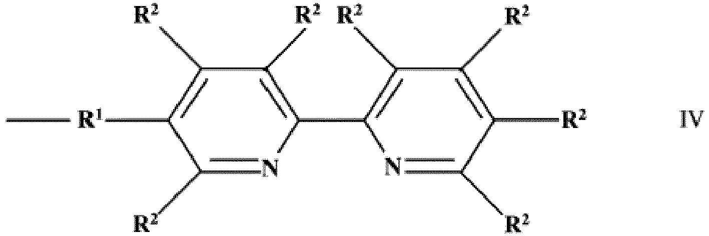 wobei R¹ das Verbindungsglied von Z zu Y in Formel I bildet und R¹ eine kovalente Bindung, ein lineares C2- bis C8-Alkylen, Arylen, alkylsubstituiertes Arylen, arylsubstituiertes Alkylen, Thioalkylen oder Thioarylen ist, und R² unabhängig aus der Gruppe ausgewählt sind, bestehend aus Wasserstoff, einem linearen C2- bis C6-Alkyl und einem verzweigten C2- bis C6-Alkyl.

3. Funktionalisiertes dienbasiertes Elastomer nach Anspruch 1, wobei X aus der Gruppe ausgewählt ist, bestehend aus StyrolButadien-Kautschuken, Polybutadienkautschuken und Polyisoprenkautschuken.

4. Funktionalisiertes dienbasiertes Elastomer nach Anspruch 1, wobei Z einen Liganden umfasst, der aus der Gruppe ausgewählt ist, bestehend aus substituierten 2,2';6'2"-Terpyridinylgruppen, unsubstituierten 2,2';6'2"-Terpyridinylgruppen, substituierten 2,2'-Bipyridinylgruppen und unsubstituierten 2,2'-Bipyiridinylgruppen.

5. Funktionalisiertes dienbasiertes Elastomer nach Anspruch 1, wobei -[- Y-Z ]-Gruppe aus der Gruppe ausgewählt ist, bestehend aus 6-(2,2';6'2"-Terpyridin-4'-ylsulfanyl)hexyl-1-sulfanyl, 2,2';6'2"-Terpyridin-4'-ylsulfanyl und 4-(2,2';6'2''-Terpyridin-4'-yl)phenylmethylsulfanyl.

6. Funktionalisiertes dienbasiertes Elastomer nach Anspruch 1, wobei n im Bereich von 2 bis 30 liegt.

7. Kautschukzusammensetzung, umfassend das funktionalisierte Elastomer nach mindestens einem der vorhergehenden Ansprüche und ein Metallion.

8. Kautschukzusammensetzung nach Anspruch 7, wobei das Metallion umfasst, oder in Form vorliegt von oder durch:
(i) ein Metallsalz; oder
(ii) ein Metall-Nanopartikel, oder
(iii) einen metallierten Füllstoff, der aus der Gruppe ausgewählt ist, bestehend aus einem metallierten Carbon Black und einem metallierten Silika; oder
(iv) eine metallierte Kurzfaser; oder
(v) ein verkapseltes Metallion.

9. Kautschukzusammensetzung nach Anspruch 8, wobei das verkapselte Metallion umfasst, oder vorliegt in Form von oder durch, ein Metallsalz, das mit einem Beschichtungsmaterial verkapselt ist, bevorzugt mit einem Beschichtungsmaterial, das aus der Gruppe ausgewählt ist, bestehend aus Wachsen, Harzen, Kohlenstoffpechen, thermoplastischen Elastomeren und Thermoplasten.

10. Kautschukzusammensetzung nach Anspruch 7, 8 oder 9, wobei
(i) das Metallion umfasst, oder vorliegt in Form von oder durch, ein Metallsalz, das aus der Gruppe ausgewählt ist, bestehend aus FeSO₄ ·7H₂O, FeCl₂, NiCl₂, RuCl₃, Kobaltstearat und Zinkstearat; oder
(ii) das Metallion umfasst, oder vorliegt in Form von oder durch, mindestens ein Element, das aus der Gruppe ausgewählt ist, bestehend aus metalliertem Carbon Black, metalliertem Silika, auf der Oberfläche eines Stahlkords angeordnetem Kupfer, metallierten Kurzfasern und Metallnanopartikeln.

11. Reifen, umfassend die Kautschukzusammensetzung gemäß mindestens einem der vorhergehenden Ansprüche 7 bis 10.

12. Reifen nach Anspruch 11, wobei das Metallion umfasst, oder vorliegt in Form von oder durch, auf der Oberfläche eines Reifen-Stahlkords angeordnetem Kupfer, und wobei die Kautschukzusammensetzung mit dem Reifen-Stahlkord in Kontakt ist.

13. Reifen nach Anspruch 11 oder 12, wobei der Reifen ein Notlaufluftreifen ist, der einen Seitenwandeinsatz umfasst, wobei der Seitenwandeinsatz die Kautschukzusammensetzung gemäß mindestens einem der vorhergehenden Ansprüche 7 bis 10 umfasst.

## Revendications

1. Élastomère fonctionnalisé à base diénique répondant à la formule I
x-⁅Y-Z]ₙ (I)
dans laquelle X représente un polymère qui dérive d'un monomère comprenant au moins un monomère diénique conjugué et de manière facultative au moins un monomère vinylaromatique ; Z comprend un groupe faisant office de ligand polydenté capable de former un complexe avec un ion métallique ; Y représente un atome de soufre divalent lié à la fois à X et à Z ; et n représente le nombre de groupes -[-Y-Z] liés à X, **caractérisé en ce que** Z comprend un ligand choisi parmi le groupe constitué par un groupe bipyridinyle substitué, un groupe bipyridinyle non substitué, un groupe terpyridinyle substitué, un groupe terpyridinyle non substitué, un groupe phénanthrolinyle substitué, un groupe phénanthrolinyle non substitué, un groupe pyrazinyle substitué et un groupe pyrazinyle non substitué.

2. Élastomère fonctionnalisé à base diénique selon la revendication 1, dans lequel Z comprend un ligand répondant à la formule II, III ou IV 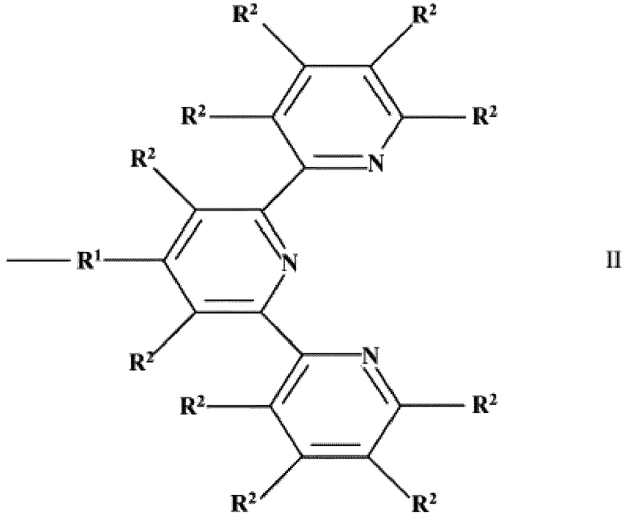 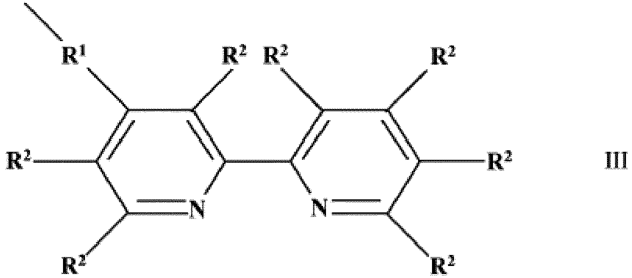 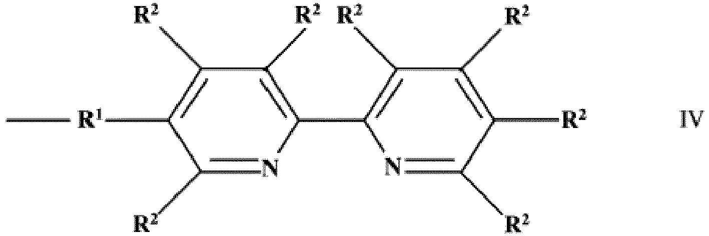 dans lesquelles R¹ forme la liaison de Z à Y dans la formule I et R¹ représente une liaison covalente, un groupe alkylène linéaire en C₂-C₈, un groupe arylène, un groupe arylène substitué par un groupe alkyle, un groupe alkylène substitué par un groupe aryle, un groupe thioalkylène un ou un groupe thioarylène ; et R² est choisi de manière indépendante parmi le groupe constitué par un atome d'hydrogène, un groupe alkyle linéaire en C₂-C₆ ; et un groupe alkyle ramifié en C₂-C₆.

3. Élastomère fonctionnalisé à base diénique selon la revendication 1, dans lequel X est choisi parmi le groupe constitué par des caoutchoucs de styrène-butadiène, des caoutchoucs de polybutadiène et des caoutchoucs de polyisoprène.

4. Élastomère fonctionnalisé à base diénique selon la revendication 1, dans lequel Z comprend un ligand choisi parmi le groupe constitué par un groupe 2,2';6'2"-terpyridinyle substitué, un groupe 2,2';6'2"-terpyridinyle non substitué, un groupe 2,2'-bipyridinyle substitué et un groupe 2,2'-bipyridinyle non substitué.

5. Élastomère fonctionnalisé à base diénique selon la revendication 1, dans lequel le groupe -[-Y-Z] est choisi parmi le groupe constitué par un groupe 6-(2,2';6'2"-terpyridin-4'-ylsulfanyl)-hexyl-1-sulfanyle, un groupe 2,2';6'2"-terpyridin-4'-ylsulfanyle et un groupe 4-(2,2';6'2''-terpyridin-4'-yl)phénylméthylsulfanyle.

6. Élastomère fonctionnalisé à base diénique selon la revendication 1, dans lequel n se situe dans la plage de 2 à 30.

7. Composition de caoutchouc comprenant l'élastomère fonctionnalisé selon au moins une des revendications précédentes et un ion métallique.

8. Composition de caoutchouc selon la revendication 7, dans lequel l'ion métallique comprend ou est fourni sous la forme de ou par :
(i) un sel métallique ;
(ii) une nanoparticule métallique ; ou
(iii) une matière de charge obtenue par métallation choisie parmi le groupe constitué par du noir de carbone obtenu par métallation et une silice obtenue par métallation ; ou
(iv) une courte fibre à base de métal ; ou
(v) un ion métallique encapsulé.

9. Composition de caoutchouc selon la revendication 8, dans laquelle l'ion métallique encapsulé comprend ou est fourni sous la forme de ou par un sel métallique encapsulé dans une matière d'enduction, de préférence dans une matière d'enduction choisie parmi le groupe constitué par des cires, des résines, du brai de houille, des élastomères thermoplastiques et des matières thermoplastiques.

10. Composition de caoutchouc selon la revendication 7, 8 ou 9, dans laquelle :
(i) l'ion métallique comprend ou est fourni sous la forme de ou par un sel métallique choisi parmi le groupe constitué par FeSO₄*7H₂O, FeCl₂, NiCl₂, RuCl₃, le stéarate de cobalt et le stéarate de zinc ; ou
(ii) l'ion métallique comprend ou est fourni sous la forme de ou par au moins un membre choisi parmi le groupe constitué par du noir de carbone obtenu par métallation, de la silice obtenue par métallation, du cuivre disposé sur la surface d'un câblé en acier, de courtes fibres à base de métal et des nanoparticules à base de métal.

11. Bandage pneumatique comprenant la composition de caoutchouc selon au moins une des revendications précédentes 7 à 10.

12. Bandage pneumatique selon la revendication 11, dans lequel l'ion métallique comprend ou est fourni sous la forme de ou par du cuivre disposé sur la surface d'un câblé en acier du bandage pneumatique, et dans lequel la composition de caoutchouc est mise en contact avec le câblé en acier du bandage pneumatique.

13. Bandage pneumatique selon la revendication 11 ou 12, dans lequel le bandage pneumatique est un bandage pneumatique permettant de rouler à plat comprenant un insert de flanc, l'insert de flanc comprenant la composition de caoutchouc selon au moins une des revendications précédentes 7 à 10.
